# EUROPEAN PATENT SPECIFICATION

(11) **EP 1 302 644 B1**
(45) Date of publication and mention of the grant of the patent: **08.11.2006**
(21) Application number: 02022502.5
(22) Date of filing: 07.10.2002
(51) Int. Cl.: F02D 33/02, F02D 41/10, F02B 37/24, F02D 23/02

(54) **Method for controlling an exhaust-gas turbocharger with a variable turbine geometry**
Verfahren zur Steuerung eines Abgasturboladers mit verstellbarer Turbinengeometrie
Procédé pour la commande d'un turbocompresseur avec une turbine à géométrie variable

(30) Priority: 15.10.2001 LU 90848
(43) Date of publication of application: 16.04.2003
(73) Proprietor: Delphi Technologies, Inc., Troy, MI 48007 (US)
(72) Inventor: Barthelet, Pierre, 6791 Athus (BE); Ghezzi, Olivier, 57330 Hettange-Grande (FR)
(74) Representative: Beissel, Jean

(56) References cited:
- EP-A- 1 031 713
- EP-A- 1 160 434
- DE-A- 19 960 166
- US-A- 4 292 807
- US-A- 5 224 853
- US-A- 5 782 092
- US-A- 6 058 707

## Description

### Field of the invention

The present invention generally relates to a method for controlling an exhaust-gas turbocharger with variable turbine geometry.

### Background of the invention

An exhaust-gas turbocharger generally consists of a turbine and a compressor installed on a single shaft. The turbine uses the energy of the exhaust-gas to drive the compressor. The compressor, in turn, draws in fresh air which it supplies to the engine cylinders in compressed form.

In an exhaust-gas turbocharger with variable turbine geometry, a governing mechanism is provided to vary the flow cross-section of the exhaust-gases onto the turbine. Among the different types of governing mechanisms, the multi-vane diffuser has general acceptance as it combines a wide control with high efficiency levels. Such a multi-vane diffuser is adjustable between a fully open position and a closed position, in which the flow cross-section for the exhaust-gases is minimal. Generally, a closed-loop control system is used to control the actuation of the multi-vane diffuser. Based on a comparison between a desired boost pressure and an actual boost pressure, the closed-loop control system generates a control signal which sets the position of the multi-vane diffuser to thereby obtain a corresponding flow cross-section.

Such closed-loop control systems are satisfactory for steady state operation, but do not operate well in transient conditions. For example, when there is a sudden increase in the demand of boost pressure, e.g. following a transition from idle to high load, the natural action of the system is to drive the control signal in such a way as to reduce the turbine area in order to increase boost pressure. If the control system has been calibrated for fast response, the multi-vane diffuser will probably be rapidly transferred into its closed position in order to increase the boost pressure as rapidly as possible, before opening the multi-vane diffuser again as the new desired boost pressure is approached.

Unfortunately, as the turbine flow area is reduced during the initial phase of the transient change in conditions, the exhaust manifold pressure rises more rapidly than the boost pressure (i.e. the intake manifold pressure). This effect typically results in a large negative pressure differential across the engine, that is between the engine intake manifold and the engine exhaust manifold, and this causes a large reduction in engine volumetric efficiency. To the driver, this is detected as a loss of performance and an increase in smoke emissions.

EP-A-1 160 434 (prior art under article 54(3) EPC) describes a system for controlling the actuator of a governing mechanism of a turbocharger, wherein in case of an acceleration condition which is detected based on torque request, the system comprises means for generating a progressively decreasing limit signal for the turbocharger control signal so as to avoid an excessive closure of the turbine diffuser. This limit signal is generated based on engine speed.

### Object of the invention

The object of the present invention is to provide a simple method for controlling an exhaust-gas turbocharger with variable turbine geometry, which allows improved performances in transient operating conditions following an acceleration. This object is achieved by a method as claimed in claim 1.

### Summary of the invention

According to the present invention, a method for controlling an exhaust-gas turbocharger with variable turbine geometry in an internal combustion engine is proposed. The turbocharger comprises a turbine in communication with an exhaust-gas manifold of the engine and a compressor connected to the turbine, the compressor being in communication with an air intake manifold of the engine. The turbocharger further comprises a governing mechanism upstream of the turbine for adjusting the flow cross-section of the exhaust-gases onto the turbine, the governing mechanism being sensitive to a control signal generated by a control unit for controlling the position - i.e. the configuration - of the governing mechanism so as to obtain a corresponding flow cross-section. Such a governing mechanism can generally be adjusted between a closed position and a fully open position, defining respectively a minimal and a maximal flow cross-section. According to an important aspect of the invention, in case an acceleration condition of the engine is detected, a limitation on the flow cross-section defined by the governing mechanism is imposed in such a way that the flow cross-section cannot be inferior to a limit flow cross-section, which depends on the gas mass flow rate through the turbine.

In other words, as soon as an acceleration condition is detected, e.g. after a full pedal tip-in, the governing mechanism will be controlled in such a way that the flow cross-section will not be systematically reduced to the minimum, but that it will at most be reduced to a limit flow cross-section, which depends on gas mass flow rate through the turbine. As a matter of fact, in a turbocharger with variable turbine geometry, the efficiency of the turbine is function of both the exhaust-gas mass flow rate traversing the turbine and the configuration of the governing mechanism, i.e. the flow cross-section it defines. The isentropic efficiency, which corresponds to the comparison of the actual power output with the isentropic (ideal) power output, shall preferably be used to evaluate the turbine efficiency. Typically, for a given position of the governing mechanism - i.e. for a given flow cross-section - the efficiency of the turbine firstly increases to a peak value as the exhaust-gas mass flow rate traversing the turbine increases, and then decreases.

In fact, when the flow rate exceeds a certain value, further reducing the flow cross-section onto the turbine will not permit an increase in boost pressure. Moreover, beyond a given point, an increase in boost pressure, obtained at the expense of an excessive exhaust engine back pressure, will not result in an increase in gas flow through the engine due to the decrease in engine volumetric efficiency.

Therefore, reducing the flow cross-section through the turbine to the minimum (closed position of the governing mechanism) during an acceleration will generally not permit a rapid response of the engine.

Engine performances in transient conditions may thus be improved according to the present invention by setting a lower limit for the flow cross-section defined by the governing mechanism, this limit depending on the value of the mass flow rate through the turbine.

A merit of the present invention is thus to have taken into account the influence of turbine efficiency and of engine volumetric efficiency in the control of the turbocharger, so as to obtain an improved engine response during transient conditions following an acceleration. Thanks to the limitation on the flow cross-section, the governing mechanism will generally not be set to the minimal flow cross-section during e.g. a high-load or full-load transient maneuver, thus reducing engine back pressure and improving turbine efficiency. As a result, the engine response to an acceleration is improved, turbo lag is thus reduced, and emissions (smoke) are simultaneously reduced.

In practice, the method of the invention may be programmed e.g. in an Engine Control Unit (ECU), and will permit to improve the response of the turbocharger, which will generally be also controlled by the conventional closed-loop control system. The closed-loop control system, typically a PID (Proportional, Integral, Differential) controller, will adequately control the governing mechanism during steady or quasi-steady state engine operation. Following a detected acceleration condition, according to the present method, a limit to the action of the closed-loop control system will be imposed, thereby ensuring improved performances during transient conditions following an acceleration. As soon as the acceleration condition stops, the limitation on the flow cross-section of the governing mechanism is removed, and the closed loop control-system continues its control of the governing mechanism.

In a preferred embodiment, the mass flow rate through the turbine is the mass flow rate of fresh air flowing into the engine measured upstream of the compressor. Indeed, the intake air mass flow rate approximately corresponds to the exhaust-gas mass flow rate, since all the intake air flows through the compressor and all the exhaust-gases pass through the turbine. Besides, the fresh air mass flow rate is an information which is typically available in the ECU of engines equipped with an exhaust-gas recirculation (EGR) system, as it is used for EGR control. It is thus not necessary to provide additional sensors for the implementation of the present method.

In an alternative embodiment, the mass flow rate through the turbine may be the exhaust-gas mass flow rate in the exhaust line. Preferably, an estimation of the exhaust-gas mass flow rate will be used. An acceptable estimation of the exhaust-gas mass flow rate is obtained by adding the fresh air mass flow rate to the estimated injected fuel quantity, both values being generally available from the ECU.

Regarding the implementation of the limitation on the flow cross-section of the governing mechanism, it may be done by imposing a limitation on the control signal, since the latter controls the configuration of the governing mechanism, and thus the flow cross-section. Accordingly, a look-up table giving the limit signal value - corresponding to the limit flow cross-section - in function of the mass flow rate may be stored in the ECU. In such a case, there is no need for additional sensors to implement the limitation on the flow cross-section defined by the governing mechanism.

In advanced turbo-control systems, the actual configuration of the governing mechanism is given by a position sensor measuring e.g. the position of an actuator that actuates the governing mechanism. Due to manufacturing tolerances as well as aerodynamic forces, the configuration of the governing mechanism may not correspond exactly to the indication of the control signal. Therefore, a position sensor allows a feed-back of the actual configuration of the governing mechanism to the ECU, which allows a very precise control of the governing mechanism and thus of the flow cross-section.

In such a case where the actual configuration of the governing mechanism is known from a position sensor, the limitation on the flow cross-section defined by the governing mechanism may be carried out by imposing a limitation on the position value of the latter. Therefore, a look-up table giving the limit position - corresponding to the limit flow cross-section - in function of the mass flow rate may be stored in the ECU.

Preferably, the detection of engine acceleration is based on the monitoring of fuel quantity, boost error and rate of increase of the desired boost pressure. Boost error is the difference between the desired boost pressure and the actual boost pressure, i.e. the intake manifold air pressure downstream of the compressor. Fuel quantity and desired boost pressure are determined from look-up tables on the basis of engine speed and desired torque, which is typically derived from the accelerator pedal position. The acceleration condition is considered as detected when each of said fuel quantity, boost error and rate of increase of desired boost pressure simultaneously exceed a respective threshold. Here again, the variables used to detect the acceleration condition are generally already available in the ECU, which further simplifies the implementation of the method of the invention.

The present method thus permits an improved control of an exhaust-gas turbocharger with variable turbine geometry. Moreover, it proves extremely economic, since its implementation may be adapted to use the parameters that are typically available in the ECU, and there is no need for additional equipment.

The present method can be used for controlling a variety of types of exhaust-gas turbochargers with variable turbine geometry. It is particularly well adapted for controlling a turbocharger equipped with a multi-vane diffuser, which uses a multiplicity of adjustable guide blades. Generally, an adjusting ring is rotated to provide simple adjustment of the blade angle. The blades in turn, are swiveled to the desired angles using adjusting cams, or directly via adjusting levers attached to the individual blades. Actuation of the adjusting ring may be achieved by a pneumatic actuator, operated either with vacuum or positive pressure. An electric actuator featuring position feed-back may alternatively be used for actuating the adjusting ring. The blades of the multi-vane diffuser can thus be moved between a closed position, in which a minimal flow area is defined, and a fully open position, in which a maximal flow area is defined. Such a governing mechanism, allowing to vary the flow cross-section and the orientation of the exhaust-gases onto the turbine blades, has general acceptance as it combines a wide control with high efficiency levels.

The present method is also applicable for variable geometry turbine turbochargers having their governing mechanism based on other techniques, using e.g. a mobile nozzle piston system, a single adjustable blade, or twin scroll switching.

## Claims

1. A method for controlling an exhaust-gas turbocharger with variable turbine geometry in an internal combustion engine, said turbocharger comprising a turbine in communication with an exhaust-gas manifold of said engine; a compressor connected to said turbine and in communication with an air intake manifold of said engine; and a governing mechanism upstream of said turbine that can be adjusted for varying the flow cross-section of exhaust-gases onto said turbine, said governing mechanism being sensitive to a control signal generated by a control unit, wherein in case of a detected acceleration condition, a limitation on the flow cross-section defined by said governing mechanism is imposed in such a way that said flow cross-section cannot be inferior to a limit flow cross-section, **characterized in that** said limit flow cross-section depends on the value of the mass flow rate through said turbine.

2. The method according to claim 1, **characterized in that** said mass flow rate through said turbine is the mass flow rate of fresh air measured upstream of said compressor.

3. The method according to claim 1, **characterized in that** said mass flow rate is the exhaust-gas mass flow rate in the exhaust line.

4. The method according to claim 1, **characterized in that** said mass flow rate through said turbine is an estimation of the exhaust-gas mass flow rate corresponding to the sum of the fresh air mass flow rate and the estimated injected fuel quantity.

5. The method according to any one of claims 1 to 3, **characterized in that** said limitation on the flow cross-section defined by said governing mechanism is carried out by imposing a limitation on said control signal in function of the value of the mass flow rate through said turbine.

6. The method according to any one of claims 1 to 4, **characterized in that**
a position sensor is used to determine the position of said governing mechanism; and
said limitation on the flow cross-section defined by said governing mechanism is carried out by imposing a limitation on the position of said governing mechanism in function of the value of the mass flow rate through said turbine.

7. The method according to any one of the preceding claims, **characterized in that** said detection of said acceleration condition is based on fuel quantity, boost error and rate of increase of desired boost pressure, said acceleration condition being detected when each of said fuel quantity, boost error and rate of increase of desired boost pressure simultaneously exceed a respective threshold.

## Patentansprüche

1. Verfahren zur Steuerung eines Abgasturboladers mit verstellbarer Turbinengeometrie bei einem Verbrennungsmotor, wobei der Turbolader umfasst: eine Turbine, die mit einem Abgasrohr des Motors in Verbindung steht; einen Verdichter, der mit der Turbine verbunden ist und mit einem Lufteinlassrohr des Motors in Verbindung steht; und einen Regelmechanismus stromaufwärts der Turbine, der verstellt werden kann, um den Durchflussquerschnitt von Abgasen zur Turbine zu verändern, wobei der Regelmechanismus für ein von einem Steuergerät erzeugtes Steuersignal empfindlich ist, wobei im Falle eines erkannten Beschleunigungszustands eine Begrenzung des durch den Regelmechanismus definierten Durchflussquerschnitts in einer solchen Weise auferlegt wird, dass der Durchflussquerschnitt nicht kleiner als ein Grenzdurchflussquerschnitt sein kann, **dadurch gekennzeichnet, dass** der Grenzdurchflussquerschnitt vom Wert des Massendurchflusses durch die Turbine abhängt.

2. Verfahren nach Anspruch 1, **dadurch gekennzeichnet, dass** der Massendurchfluss durch die Turbine der Massendurchfluss von Frischluft ist, der stromaufwärts des Verdichters gemessen wird.

3. Verfahren nach Anspruch 1, **dadurch gekennzeichnet, dass** der Massendurchfluss der Massendurchfluss der Abgase in der Abgasleitung ist.

4. Verfahren nach Anspruch 1, **dadurch gekennzeichnet, dass** der Massendurchfluss durch die Turbine eine Berechnung des Massendurchflusses der Abgase ist, der der Summe aus dem Massendurchfluss der Frischluft und der berechneten eingespritzten Kraftstoffmenge entspricht.

5. Verfahren nach irgendeinem der Ansprüche 1 bis 3, **dadurch gekennzeichnet, dass** die Begrenzung des, durch den Regelmechanismus definierten Durchflussquerschnitts durchgeführt wird, indem dem Steuersignal in Abhängigkeit vom Wert des Massendurchflusses durch die Turbine eine Begrenzung auferlegt wird.

6. Verfahren nach irgendeinem der Ansprüche 1 bis 4, **dadurch gekennzeichnet, dass**
ein Positionssensor verwendet wird, um die Position des Regelmechanismus zu bestimmen; und
die Begrenzung des durch den Regelmechanismus definierten Durchflussquerschnitts durchgeführt wird, indem der Position des Regelmechanismus in Abhängigkeit vom Wert des Massendurchflusses durch die Turbine eine Begrenzung auferlegt wird.

7. Verfahren nach irgendeinem der vorangehenden Ansprüche, **dadurch gekennzeichnet, dass** die Erkennung des Beschleunigungszustands auf der Kraftstoffmenge, dem Ladedruckfehler und der Steigerungsrate des Soll-Ladedrucks basiert, wobei der Beschleunigungszustand erkannt wird, wenn die Kraftstoffmenge, der Ladedruckfehler und die Steigerungsrate des Soll-Ladedrucks jeweils gleichzeitig einen jeweiligen Schwellwert überschreiten.

## Revendications

1. Procédé pour commander un turbocompresseur avec une turbine à géométrie variable dans un moteur à combustion interne, ledit turbocompresseur comprenant une turbine en communication avec une tubulure d'échappement dudit moteur un compresseur connecté à ladite turbine et en communication avec une tubulure d'admission d'air dudit moteur ; et un mécanisme de régulation en amont de ladite turbine qui peut être ajusté pour faire varier la section de passage de flux de gaz d'échappement sur ladite turbine, ledit mécanisme de régulation étant sensible à un signal de commande généré par une unité de commande, dans lequel dans le cas d'une condition d'accélération détectée, une limitation de la section de passage de flux définie par ledit mécanisme de régulation est imposée de telle manière que ladite section de passage de flux ne peut être inférieure à une section de passage de flux limite, **caractérisé en ce que** ladite section de passage de flux limite dépend de la valeur du débit massique à travers ladite turbine.

2. Procédé selon la revendication 1, **caractérisé en ce que** ledit débit massique à travers ladite turbine est le débit massique d'air frais mesuré en amont dudit compresseur.

3. Procédé selon la revendication 1, **caractérisé en ce que** ledit débit massique à travers ladite turbine est le débit massique de gaz d'échappement dans la ligne d'échappement.

4. Procédé selon la revendication 1, **caractérisé en ce que** ledit débit massique à travers ladite turbine est une estimation du débit massique de gaz d'échappement correspondant à la somme du débit massique d'air frais et de la quantité estimée de carburant injecté.

5. Procédé selon l'une quelconque des revendications 1 à 3, **caractérisé en ce que** ladite limitation de la section de passage de flux définie par ledit mécanisme de régulation est réalisée en imposant une limitation audit signal de commande en fonction de la valeur du débit massique à travers ladite turbine.

6. Procédé selon l'une quelconque des revendications 1 à 4, **caractérisé en ce qu'**un détecteur de position est utilisé pour déterminer la position dudit mécanisme de régulation ; et
ladite limitation de la section de passage de flux définie par ledit mécanisme de régulation est réalisée en imposant une limitation à la position dudit mécanisme de régulation en fonction de la valeur du débit massique à travers ladite turbine.

7. Procédé selon l'une quelconque des revendications précédentes, **caractérisé en ce que** ladite détection de ladite condition d'accélération est basée sur la quantité de carburant, l'erreur de suralimentation et le taux d'augmentation de la pression de suralimentation désirée, ladite condition d'accélération étant détectée lorsque chacun desdits quantité de carburant, erreur de suralimentation et taux d'augmentation de la pression de suralimentation désirée excède simultanément un seuil respectif.
